# EUROPÄISCHE PATENTSCHRIFT

(11) **EP 4 325 089 B1**
(45) Veröffentlichungstag und Bekanntmachung des Hinweises auf die Patenterteilung: **01.07.2026**
(21) Anmeldenummer: 23190546.4
(22) Anmeldetag: 09.08.2023
(51) Int. Cl.: F16H 48/40, F16H 57/08

(54) **KLEMMBAUSTEINDIFFERENZIAL**
CLAMPING COMPONENT DIFFERENTIAL
DIFFÉRENTIEL À BLOCS DE SERRAGE

(30) Priorität: 14.08.2022 CN 202222131421 U; 08.03.2023 DE 102023105776
(43) Veröffentlichungstag der Anmeldung: 21.02.2024
(73) Patentinhaber: Doubleeagle Industry (China) Limited, Wanchai, Hong Kong (HK)
(72) Erfinder: Puotkalis, Martynas, 10318 V.Grybo 23-15, Vilnius (LT)
(74) Vertreter: von Bülow & Tamada

(56) Entgegenhaltungen:
- WO-A1-2021/074282
- JP-A- H0 617 889
- US-A1- 2011 263 374

## Beschreibung

### Beschreibung

Die vorliegende Erfindung betrifft ein Klemmbausteindifferenzial gemäß dem Oberbegriff des Anspruchs 1.

Ein derartiges Klemmbausteindifferenzial ist aus der WO 2021/074282 A1 bekannt.

Aufgabe der Erfindung ist, das bekannte Klemmbausteindifferenzial zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung, umfasst ein Klemmbausteindifferenzial einen sich in einer Längsrichtung, einer Querrichtung quer zur Längsrichtung und einer Höhenrichtung quer zur Längsrichtung und quer zur Querrichtung erstreckenden Differenzialkäfig mit einem sich in der Längsrichtung und der Querrichtung erstreckenden Käfigboden, von dem sich in der Höhenrichtung eine erste Käfigwand und eine zweite Käfigwand erstrecken, die in der Querrichtung voneinander beabstandet sind und mit einer sich in der Höhenrichtung erstreckenden Käfigsäule, die an den Käfigwänden gehalten ist, ein auf den Käfigboden aufgelegtes erstes Sonnenrad, welches eingerichtet ist, durch den Käfigboden eine erste Abtriebswelle anzutreiben, ein Planetenrad, welches mit dem ersten Sonnenrad in Eingriff steht, einen Deckel, der in der Höhenrichtung dem Käfigboden gegenüberliegend an den Käfigwänden gehalten ist, und ein zwischen der Käfigsäule und dem Deckel gehaltenes und mit dem Planetenrad in Eingriff stehendes zweites Sonnenrad, welches eingerichtet ist, durch den Deckel eine zweite Abtriebswelle anzutreiben, wobei das Planetenrad drehbar an einem Drehlager der Käfigsäule gehalten ist.

Dem angegebenen Klemmbausteindifferenzial liegt die Überlegung zugrunde, dass im bekannten Klemmbausteindifferenzial die lose Einlegung von Planetenrädern entweder wenigstens drei Planetenräder erfordert, oder sehr aufwändige Stabilisierungsmaßnahmen, wie beispielsweise das Einziehen zusätzlicher Wände.

Diese Überlegung zugrunde gelegt wird mit dem vorliegenden Klemmbausteindifferenzial vorgeschlagen, die Führung der Planetenräder in deren Drehpunkt zu verlagern. Auf diese Weise kann das Klemmbausteindifferenzial grundsätzlich mit lediglich einem einzigen Planetenrad ausgebildet werden, ohne das weitere Stabilisierungsmaßnahmen erforderlich wären.

In einer Weiterbildung des angegebenen Klemmbausteindifferenzials ist das Drehlager als Gleitlager ausgebildet. Auf diese Weise lässt sich das Klemmbausteindifferenzial bauraumsparend, kostengüstig und simpel aufbauen.

In einer anderen Weiterbildung des angegebenen Klemmbausteindifferenzials besitzt das Drehlager eine Lagerachse, auf die das Planetenrad axial aufgeschoben ist. Der Weiterbildung liegt die Überlegung zugrunde, dass im bekannten Klemmbausteindifferenzial die Planetenräder an Führungselementen in den Wänden geführt werden müssen, die beispielsweise als Schlitze ausgebildet sind. Diese Schlitze führen zu Reibung. Wenn das Klemmbausteindifferenzial dann in Hochdrehzahlanwendungen zum Einsatz kommt, kann dies die Lebensdauer signifikant vermindern. Mit der Lagerachse als Drehlager lässt sich die Reibung deutlich reduzieren, so dass das angegebene Klemmbausteindifferenzial gerade in Hochgeschwindigkeitsanwendungen besonders lange haltbar ist.

In einer zusätzlichen Weiterbildung des angegebenen Klemmbausteindifferenzials besitzt die Lagerachse der Käfigsäule gegenüberliegend ein Formschlusselement, welches eine axiale Bewegung des Planetenrades von der Käfigwand weg in wenigstens einer Drehlage des Planetenrades blockiert und in wenigstens einer anderen Drehlage des Planetenrades zulässt. Auf diese Weise lässt sich das Planetenrad für den Zeitraum des Zusammenbaus des angegebenen Klemmbausteindifferenzials axial fixieren, was deren Montage spürbar vereinfacht.

In einer noch anderen Weiterbildung umfasst das angegebene Klemmbausteindifferenzial ein mit dem ersten Sonnenrad in Eingriff stehendes weiteres Planetenrad, welches drehbar an einem weiteren Drehlager der Käfigsäule gehalten ist. Auf diese Weise lassen sich Antriebskräfte in dem Getriebe auf mehrere Getriebeglieder verteilen, was zu einer spürbaren Verlängerung der Lebensdauer führt.

In einer besonderen Weiterbildung des angegebenen Klemmbausteindifferenzials sind das Drehlager und das weitere Drehlager symmetrisch zur Käfigsäule gehalten angeordnet. Auf diese Weise werden die Antriebskräfte symmetrisch auf die beiden Planetenräder verteilt, wodurch ein Risiko eines Verkantens der beiden Planetenräder deutlich verringert wird.

In einer weiteren Weiterbildung des angegebenen Klemmbausteindifferenzials erstrecken sich vom Deckel entgegen der Höhenrichtung eine erste Deckelwand und eine zweite Deckelwand, die in der Längsrichtung voneinander beabstandet sind und zwischen denen die Käfigwände in der Höhenrichtung geführt gehalten sind. Die beiden Deckelwände stabilisieren die Käfigwände quer zur Höhenrichtung, wodurch das angegebene Klemmbausteindifferenzial deutlich robuster ausgeführt ist.

In einer bevorzugten Weiterbildung des angegebenen Klemmbausteindifferenzials besitzt wenigstens eine der Deckelwände einen in der Höhenrichtung verlaufenden Schlitz, in den sich wenigstens ein Teil des Drehlager in der Höhenrichtung einsetzen lässt. Auf diese Weise wird die zuvor erläuterte Stabilisierung des Klemmbausteindifferenzials quer zur Höhenrichtung weiter verbessert.

In einer besonders bevorzugten Weiterbildung des angegebenen Klemmbausteindifferenzials liegt besitzt der Schlitz in der Höhenrichtung gesehen ein Schlitzende , wobei das Drehlager am Schlitzende mit einer mechanischen Vorspannung anliegt. Auf diese Weise wird das Klemmbausteindifferenzial unter eine mechanische Spannung gesetzt, wodurch Toleranzen ausgeglichen und ein unbeabsichtigtes Spiel vermieden werden.

In einer noch weiteren Weiterbildung des angegebenen Klemmbausteindifferenzials sind die Deckelwände mit den Käfigwänden quer zur Höhenrichtung mit einer Überblattung verbunden. Auf diese Weise wird eine Kontaktfläche zwischen den Käfigwänden und den Deckelwänden vergrößert, was die Stabilität des Klemmbausteindifferenzials noch einmal deutlich steigert.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 ein Klemmbausteindifferenzial aus einer ersten Perspektive,
Fig. 2 das Klemmbausteindifferenzial der Fig. 1 aus einer zweiten Perspektive,
Fig. 3 das Klemmbausteindifferenzial der Figs. 1 und 2 in einer Explosionsansicht,

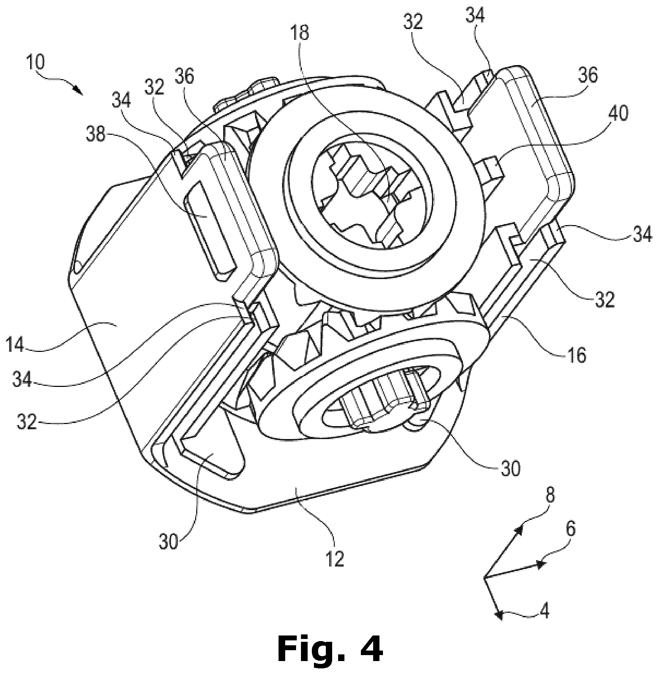

Fig. 4 einen Käfig des Klemmbausteindifferenzials aus Figs. 1 bis 3, in den Planeten- und Sonnenräder eingesetzt sind,
Fig. 5 den Käfig des Klemmbausteindifferenzials aus Fig. 3, ohne die Planeten- und Sonnenräder, und
Fig. 6 einen Deckel des Klemmbausteindifferenzials aus Figs. 1 bis 3.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

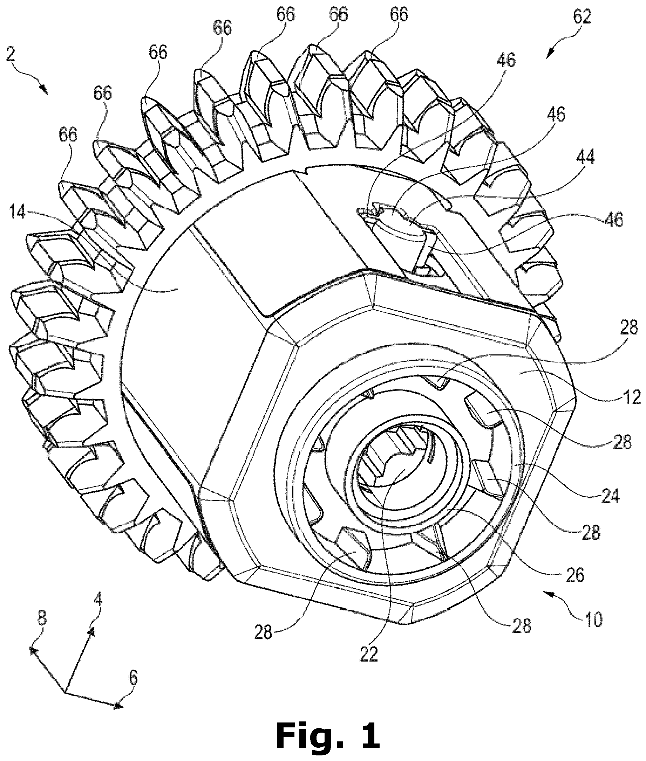

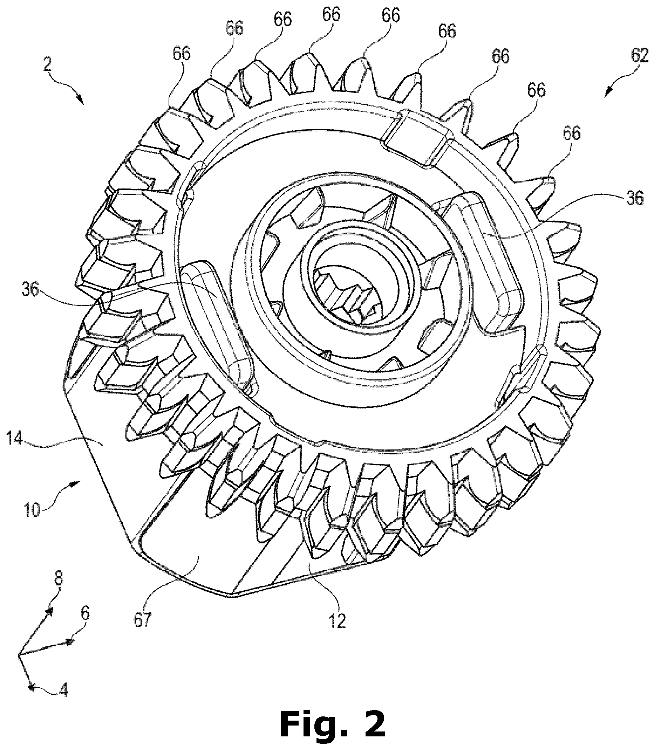

Es wird auf die Fig. 1 bis 3 Bezug genommen, die ein Klemmbausteindifferenzial 2 aus zwei verschiedenen Perspektiven und in einer Explosionsansicht zeigen. Unter einem Differenzialgetriebe, auch Ausgleichsgetriebe oder kurz Differenzial genannt, ist ein spezielles Planetengetriebe, auch Umlaufrädergetriebe genannt mit einem Antrieb und zwei Abtrieben.

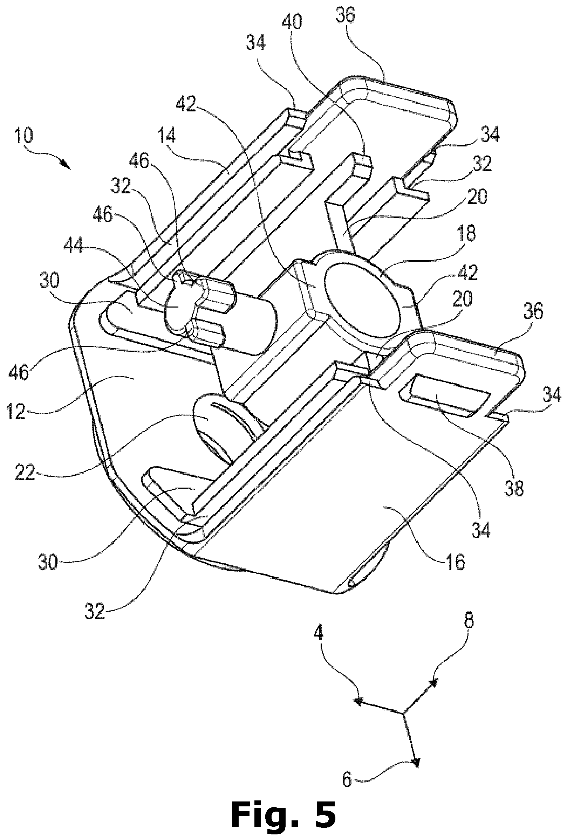

Das Klemmbausteindifferenzial 2 umfasst einen sich in einer Längsrichtung 4, einer Querrichtung 6 quer zur Längsrichtung 4 und einer Höhenrichtung 8 quer zur Längsrichtung 4 und quer zur Querrichtung 6 erstreckenden Differenzialkäfig 10. Der Differenzialkäfig 10 dient in einem Planetengetriebe als Träger der Planetenräder, auf die an späterer Stelle näher eingegangen wird. Er ist in Fig. 5 isoliert dargestellt und besitzt einen sich in der Längsrichtung 4 und der Querrichtung 6 erstreckenden Käfigboden 12, von dem sich in der Höhenrichtung 8 eine erste Käfigwand 14 und eine zweite Käfigwand 16 erstrecken, die in der Querrichtung 6 voneinander beabstandet sind. Ferner besitzt der Differenzialkäfig 10 eine sich in der Höhenrichtung 8 erstreckende Käfigsäule 18, die über Verbindungswände 20 an den Käfigwänden 14, 16 gehalten ist.

Durch den Käfigboden 12 ist eine erste Abtriebsöffnung 22 geführt, durch die sich eine nicht weiter dargestellte erste Abtriebswelle in einen Innenraum des Klemmbausteindifferenzial 2 einführen lässt. Von der in der Höhenrichtung 8 gesehenen Unterseite des Käfigbodens 12 erstreckt sich ein axiales Abstandselement aus einem konzentrisch um die erste Abtriebsöffnung 22 angeordneten äußeren axialen Abstandsring 24 und einen inneren axialen Abstandsring 26, wobei der äußere axiale Abstandsring mit radialen Stützelementen 28 stabilisiert ist. Von diesen radialen Stützelementen 28 sind der Übersichtlichkeit halber nicht alle mit einem eigenen Bezugszeichen versehen.

Auf der in der Höhenrichtung 8 gesehenen Oberseite des Käfigbodens 12 sind zwei in der Querrichtung 6 beabstandete Führungsplatten 30 für eine Querführung ausgebildet, auf die an späterer Stelle näher eingegangen wird. An eine von der Abtriebsöffnung 22 aus gesehenen Außenseite schließt sich an je eine Führungsplatte 30 entgegen der Querrichtung 6 die erste Käfigwand 14 und in der Querrichtung 6 die zweite Käfigwand 16 an. An jeder in und entgegen der Längsrichtung 4 gesehenen Randkante jeder Käfigwand 14, 16 ist je ein Führungsschlitz 32 ausgebildet, auf den an späterer Stelle näher eingegangen wird. In der Summe besitzt der Differenzialkäfig 10 so vier Führungsschlitze 32.

Jede in und entgegen der Längsrichtung 4 gesehene Randkante jeder Käfigwand 14, 16 schließt an ihrer in der Höhenrichtung 8 gesehenen Oberseite mit einer Anschlagschulter 34 ab. Zwischen den Anschlagschultern 34 schließt sich in der Höhenrichtung 8 an jede Käfigwand 14, 16 eine Einführzunge 36 an, wobei an jeder Einführzunge 36 von der Abtriebsöffnung 22 aus gesehen an der Außenseite ein Rasthaken 38 ausgebildet ist.

Jede Verbindungswand 20 besitzt an ihrer von der Abtriebsöffnung 22 aus gesehenen Außenseite eine Führungsschulter 40. Dabei liegen die nicht zur jeweiligen Führungsschulter 40 gehörenden Bereiche jede Verbindungswände 20 in der Höhenrichtung 8 maximal auf gleicher Höhe wie die Käfigsäule 18 bilden so eine Lagerfläche. In der vorliegenden Ausführung ist die Käfigsäule 18 in der Höhenrichtung 8 gesehen höher ausgebildet, als die nicht zur jeweiligen Führungsschulter 40 gehörenden Bereiche jeder Verbindungswand 20, um Fertigungstoleranzen auszugleichen.

Die Käfigsäule 18 besitzt an ihrer in der Längsrichtung 4 gesehenen Vorder- und Rückseite je einen Befestigungsvorsprung 42, an die sich je ein Drehlager in Form je einer Lagerachse 44 anschließen. Die beiden Lagerachsen 44 sind bezüglich der Käfigsäule 18 zueinander symmetrisch angeordnet. Jede Lagerachse 44 besitzt der Käfigsäule 18 gegenüberliegend drei Formschlusselemente 46, die in einem Winkel von 90° auf der Mantelfläche der Lagerachse 44 beabstandet zueinander angeordnet sind.

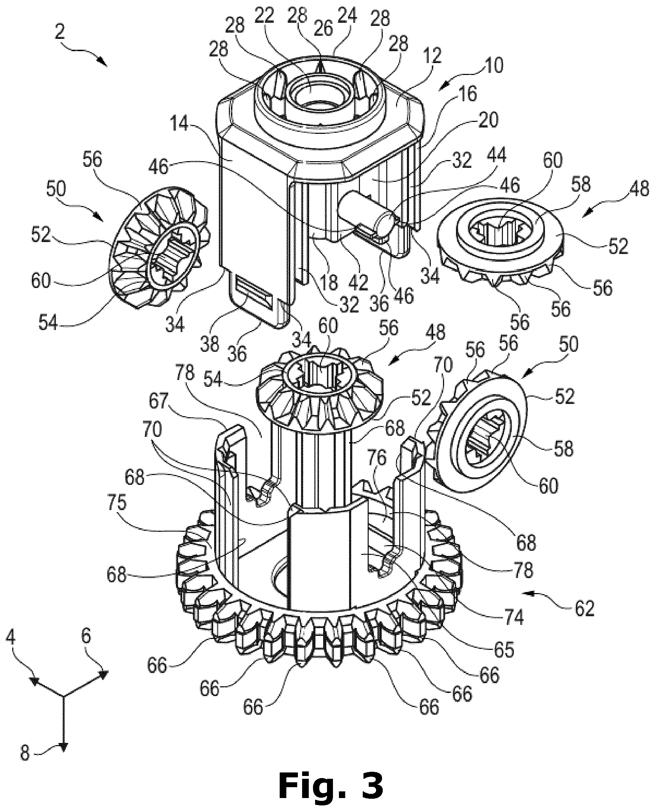

Auf den Käfigboden 12 lässt sich als Sonnenrad 48 ein Zahnrad auflegen, welches eingerichtet ist, die durch die Abtriebsöffnung 22 geführte Abtriebswelle anzutreiben. Im Klemmbausteindifferenzial 2 kommen mehrere Zahnräder als Sonnenräder 48 und Planetenräder 50 zum Einsatz, die alle baugleich sind. Deren Aufbau ist in Fig. 3 im Detail gezeigt und soll nachstehend näher erläutert werden.

Die Zahnräder 48, 50 sind als Kegelzahnräder ausgebildet und besitzen einen kreisförmigen Zahnträgerteller 52 mit einer nicht näher referenzierten Oberseite und einer der Oberseite gegenüberliegenden nicht näher referenzierten Unterseite. Von der Oberseite des Zahnträgertellers 52 erstreckt sich rechtwinklig ein Stützring 54. Zwischen dem Zahnträgerteller 52 und dem Stützring 54 sind umfänglich um den Stützring 54 äquidistant Kegelzähne 56 angeordnet, von denen der Übersichtlichkeit halber nur einige mit einem eigenen Bezugszeichen versehen sind. Von der Unterseite des Zahnträgertellers 52 erstreckt sich ein Abstandshaltering 58. Zwischen dem Abstandshaltering 58 und dem Stützring 54 ist durch den Zahnträgerteller 52 eine kreuzförmig ausgebildete Lageröffnung 60 geführt.

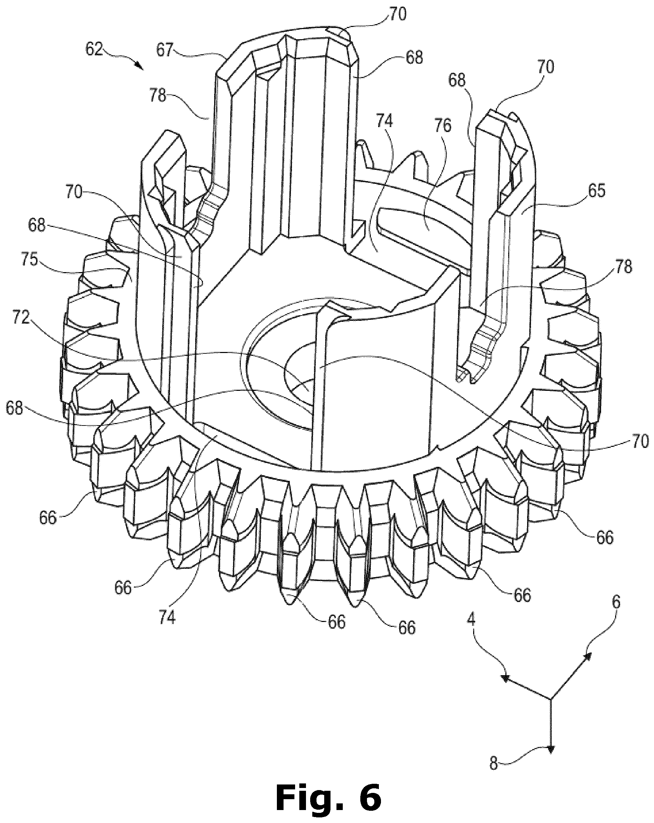

Der Differenzialkäfig 10 lässt sich mit einem Deckel 62 verschließen, der in Fig. 6 im Detail dargestellt ist. Der Deckel 62 besitzt eine kreisförmige Deckplatte 64, an deren Umfang ein Kranz 75 mit nach außen gerichteten Stirnradzähnen 66 ausgebildet ist. Von den Stirnradzähnen 66 sind der Übersichtlichkeit halber nicht alle mit einem eigenen Bezugszeichen versehen.

Wie der Differenzialkäfig 10 besitzt auch der Deckel 62 eine erste Deckelwand 65 und eine zweite Deckelwand 67, die allerdings in der Längsrichtung 4 voneinander beabstandet angeordnet sind und deren Endkanten 68 aufeinander zu gerichtet sind. Diese Endkanten sind so ausgebildet, dass sie sich in die Führungsschlitze 32 des Differenzialkäfigs 10 einschieben lassen. An den Führungsschlitzen 32 sind die Deckelwände 65, 66 mit einer Stufe 70 ausgebildet, so das im eingeschobenen Zustand der Deckelwände 65, 67 in die Führungsschlitze 32 des Differenzialkäfigs 10 eine Überblattung gebildet ist.

Durch den Deckel 62 ist ferner eine zweite Abtriebsöffnung 72 geführt, durch die sich eine nicht weiter dargestellte zweite Abtriebswelle in den Innenraum des Klemmbausteindifferenzial 2 einführen lässt. An in der Querrichtung 6 gesehenen Vorderseite und Rückseite des Deckels 62 sind ferner Einschuböffnungen 74 ausgebildet, in die sich die sich die Einführungen 36 einschieben lassen. Zusätzlich sind in den Kranz 75 Rasthakenaufnahmen 76 eingeformt, in denen sich die Rasthaken 38 verrasten lassen.

Zwischen den Endkanten 68 sind in die Deckelwände 65, 67 in der Höhenrichtung 8 verlaufende Einschubschlitze 78 eingeformt, in denen sich die Lagerachsen 44 aufnehmen lassen. Zur Aufnahme der Formschlusselemente 46 besitzen die Einschubschlitze 78 an ihren in der Höhenrichtung 8 gesehenen Enden entsprechende Aussparungen, die in den Figuren nicht mit einem eigenen Bezugszeichen versehen sind.

Zum Zusammensetzen des Klemmbausteindifferenzials 2 werden zunächst die Planetenräder 50 auf die Lagerachsen 44 aufgeschoben und leicht verdreht, damit die Formschlusselemente 44 ein unbeabsichtigtes herausrutschen der Planetenräder 50 von den Lagerachsen 44 vermeiden. Anschließend wird ein Sonnenrad 58 mit seinem Abstandshaltering 58 auf den Käfigboden 12 zwischen die Führungsplatten 30 eingeschoben, während ein weiteres Sonnenrad 58 auf die Käfigsäule 18 zwischen die beiden Führungsschultern 40 gelegt wird. Abschließend wird der Deckel 62 mit seinen beiden Deckelwänden 65, 67 so auf den Differentialkäfig 10 aufgesetzt, dass die Endkanten 68 der Deckelwände 65, 67 in die Führungsschlitze 32 der Käfigwände 14, 16 eingeschoben werden. Sobald die Rasthaken 38 der Einführzungen 36 die Rasthakenaufnahmen 76 erreichen, verrasten die Rasthaken 38 darin und sichern den Deckel 62 und den den Differentialkäfig 10 gegen ein unbeabsichtigtes Lösen.

Nun kann das Klemmbausteindifferenzial 2 in einem Klemmbausteinmodel verwendet werden. So können beispielsweise zum Aufbau eines Fahrzeugmodels durch die beiden Abtriebsöffnungen 22, 72 geeignete Wellen geführt und in die Sonnenräder 50 eingesetzt werden. Dann kann das Klemmbausteindifferenzial 2 über die Stirnradzähne 66 mit einer Antriebsenergie beaufschlagt werden. Diese Antriebsenergie wird dann auf die Wellen in den Abtriebsöffnungen 22, 72 verteilt, so dass das Fahrzeugmodel in realistischer Weise eine Kurvenfahrt durchführen kann, in der sich die Räder unterschiedlich schnell drehen können.

## Patentansprüche

1. Klemmbausteindifferenzial (2), umfassend:
- einen sich in einer Längsrichtung (4), einer Querrichtung (6) quer zur Längsrichtung (4) und einer Höhenrichtung (8) quer zur Längsrichtung (4) und quer zur Querrichtung (6) erstreckenden Differenzialkäfig (10) mit einem sich in der Längsrichtung (4) und der Querrichtung (6) erstreckenden Käfigboden (12), von dem sich in der Höhenrichtung (8) eine erste Käfigwand (14) und eine zweite Käfigwand (16) erstrecken, die in der Querrichtung (6) voneinander beabstandet sind und mit einer sich in der Höhenrichtung (8) erstreckenden Käfigsäule (18), die an den Käfigwänden (14, 16) gehalten ist,
- ein auf den Käfigboden (12) aufgelegtes erstes Sonnenrad (48), welches eingerichtet ist, durch den Käfigboden (12) eine erste Abtriebswelle anzutreiben,
- ein Planetenrad (50), welches mit dem ersten Sonnenrad (48) in Eingriff steht,
- einen Deckel (62), der in der Höhenrichtung (8) dem Käfigboden (12) gegenüberliegend an den Käfigwänden (14, 16) gehalten ist, und
- ein zwischen der Käfigsäule (18) und dem Deckel (62) gehaltenes und mit dem Planetenrad (50) in Eingriff stehendes zweites Sonnenrad (48), welches eingerichtet ist, durch den Deckel (62) eine zweite Abtriebswelle anzutreiben,
**dadurch gekennzeichnet, dass** das Planetenrad (50) drehbar an einem Drehlager (44) der Käfigsäule (18) gehalten ist.

2. Klemmbausteindifferenzial (2) nach Anspruch 1, wobei das Drehlager (44) als Gleitlager ausgebildet ist.

3. Klemmbausteindifferenzial (2) nach Anspruch 1 oder 2, wobei das Drehlager (44) eine Lagerachse besitzt, auf die das Planetenrad (50) axial aufgeschoben ist.

4. Klemmbausteindifferenzial (2) nach Anspruch 3, wobei die Lagerachse (44) der Käfigsäule (18) gegenüberliegend ein Formschlusselement (46) besitzt, welches eine axiale Bewegung des Planetenrades (50) von der Käfigsäule (18) weg in wenigstens einer Drehlage des Planetenrades (50) blockiert und in wenigstens einer anderen Drehlage des Planetenrades (50) zulässt.

5. Klemmbausteindifferenzial (2) nach einem der vorstehenden Ansprüche, umfassend ein mit dem ersten Sonnenrad (48) in Eingriff stehendes weiteres Planetenrad (50), welches drehbar an einem weiteren Drehlager (44) der Käfigsäule (18) gehalten ist.

6. Klemmbausteindifferenzial (2) nach Anspruch 5, wobei das Drehlager (44) und das weitere Drehlager (44) symmetrisch zur Käfigsäule (18) gehalten angeordnet sind.

7. Klemmbausteindifferenzial (2) nach einem der vorstehenden Ansprüche, wobei sich vom Deckel (62) entgegen der Höhenrichtung (8) eine erste Deckelwand (65) und eine zweite Deckelwand (67) erstrecken, die in der Längsrichtung (4) voneinander beabstandet sind und zwischen denen die Käfigwände (14, 16) in der Höhenrichtung (8) geführt gehalten sind.

8. Klemmbausteindifferenzial (2) nach Anspruch 7, wobei wenigstens einer der Deckelwände (65, 67) einen in der Höhenrichtung (8) verlaufenden Schlitz (78) besitzt, in denen sich wenigstens ein Teil des Drehlagers (44) in der Höhenrichtung (8) einsetzen lässt.

9. Klemmbausteindifferenzial (2) nach Anspruch 8, wobei der Schlitz (78) in der Höhenrichtung gesehen ein Schlitzende besitzt und das Drehlager (44) am Schlitzende mit einer mechanischen Vorspannung anliegt.

10. Klemmbausteindifferenzial (2) nach einem der Ansprüche 7 bis 9, wobei die Deckelwände (65, 67) mit den Käfigwänden (14, 16) quer zur Höhenrichtung (8) mit einer Überblattung (32, 70) verbunden sind.

## Claims

1. Interlocking building block differential (2), comprising:
a differential cage (10) extending in a longitudinal direction (4), a transverse direction (6) transverse to the longitudinal direction (4) and a height direction (8) transverse to the longitudinal direction (4) and
transverse to the transverse direction (6), with a cage bottom (12) extending in the longitudinal direction (4) and the transverse direction (6), from which a first cage wall (14) and a second cage wall (16) extend in the height direction (8), which are spaced apart from one another in the transverse direction (6) and with a cage pillar (18) extending in the height direction (8), which is held on the cage walls (14, 16),
a first sun gear (48) placed on the cage bottom (12), which is configured to drive a first output shaft through the cage bottom (12),
a planet gear (50), which is in engagement with the first sun gear (48),
a cover (62), which is held on the cage walls (14, 16) opposite the cage bottom (12) in the height direction (8), and
a second sun gear (48), which is held between the cage pillar (18) and the cover (62) and is in engagement with the planet gear (50), which is configured to drive a second output shaft through the cover (62),
**characterized in that** the planet gear (50) is held rotatably on a pivot bearing (44) of the cage pillar (18).

2. Interlocking building block differential (2) according to claim 1, wherein the pivot bearing (44) is designed as a plain bearing.

3. Interlocking building block differential (2) according to claim 1 or 2, wherein the pivot bearing (44) has a bearing axle onto which the planet gear (50) is pushed axially.

4. Interlocking building block differential (2) according to claim 3, wherein the bearing axle (44), opposite the cage pillar (18), has a positive-locking element (46), which blocks an axial movement of the planet gear (50) away from the cage pillar (18) in at least one angular position of the planet gear (50) and permits it in at least one other angular position of the planet gear (50).

5. Interlocking building block differential (2) according to one of the preceding claims, comprising a further planet gear (50) which is in engagement with the first sun gear (48), which is held rotatably on a further pivot bearing (44) of the cage pillar (18).

6. Interlocking building block differential (2) according to claim 5, wherein the pivot bearing (44) and the further pivot bearing (44) are arranged symmetrically with respect to the cage pillar (18).

7. Interlocking building block differential (2) according to one of the preceding claims, wherein a first cover wall (65) and a second cover wall (67) extend from the cover (62) opposite to the height direction (8), which are spaced apart from one another in the longitudinal direction (4) and between which the cage walls (14, 16) are guided and held in the height direction (8).

8. Interlocking building block differential (2) according to claim 7, wherein at least one of the cover walls (65, 67) has a slot (78) extending in the height direction (8), into which at least a part of the pivot bearing (44) can be inserted in the height direction (8).

9. Interlocking building block differential (2) according to claim 8, wherein the slot (78), as seen in the height direction, has a slot end and the pivot bearing (44) bears against the slot end with a mechanical preload.

10. Interlocking building block differential (2) according to one of claims 7 to 9, wherein the cover walls (65, 67) are connected to the cage walls (14, 16) transverse to the height direction (8) with an overlapping joint (32, 70).

## Revendications

1. Différentiel pour blocs de construction (2), comprenant :
une cage de différentiel (10) s'étendant selon une direction longitudinale (4), une direction transversale (6) transversale à la direction longitudinale (4) et une direction en hauteur (8) transversale à la direction longitudinale (4) et à la direction transversale (6), avec un fond de cage (12) s'étendant selon la direction longitudinale (4) et la direction transversale (6), à partir duquel s'étendent selon la direction en hauteur (8) une première paroi de cage (14) et une deuxième paroi de cage (16),
espacées l'une de l'autre dans la direction transversale (6), et avec une colonne de cage (18) s'étendant selon la direction en hauteur (8), qui est maintenue sur les parois de cage (14, 16),
une première roue solaire (48) disposée sur le fond de cage (12),
configurée pour entraîner un premier arbre de sortie à travers le fond de cage (12),
une roue planétaire (50), en prise avec la première roue solaire (48),
un couvercle (62), maintenu sur les parois de cage (14, 16) en opposition au fond de cage (12) selon la direction en hauteur (8), et
une deuxième roue solaire (48), maintenue entre la colonne de cage (18) et le couvercle (62) et en prise avec la roue planétaire (50), configurée pour entraîner un deuxième arbre de sortie à travers le couvercle (62),
**caractérisé en ce que** la roue planétaire (50) est montée de manière rotative sur un palier de pivot (44) de la colonne de cage (18).

2. Différentiel pour blocs de construction (2) selon la revendication 1, dans lequel le palier de pivot (44) est réalisé comme palier lisse.

3. Différentiel pour blocs de construction (2) selon la revendication 1 ou 2, dans lequel le palier de pivot (44) comporte un axe de palier sur lequel la roue planétaire (50) est enfilée axialement.

4. Différentiel pour blocs de construction (2) selon la revendication 3, dans lequel l'axe de palier (44), du côté opposé à la colonne de cage (18), comporte un élément d'emboîtement (46) qui bloque un mouvement axial de la roue planétaire (50) s'éloignant de la colonne de cage (18) dans au moins une position angulaire de la roue planétaire (50) et le permet dans au moins une autre position angulaire de la roue planétaire (50).

5. Différentiel pour blocs de construction (2) selon l'une des revendications précédentes, comprenant une autre roue planétaire (50) en prise avec la première roue solaire (48), laquelle est montée de manière rotative sur un autre palier de pivot (44) de la colonne de cage (18).

6. Différentiel pour blocs de construction (2) selon la revendication 5, dans lequel le palier de pivot (44) et l'autre palier de pivot (44) sont disposés de manière symétrique par rapport à la colonne de cage (18).

7. Différentiel pour blocs de construction (2) selon l'une des revendications précédentes, dans lequel, à partir du couvercle (62), s'étendent, en sens opposé à la direction en hauteur (8), une première paroi de couvercle (65) et une deuxième paroi de couvercle (67), espacées l'une de l'autre dans la direction longitudinale (4) et entre lesquelles les parois de cage (14, 16) sont guidées et maintenues selon la direction en hauteur (8).

8. Différentiel pour blocs de construction (2) selon la revendication 7, dans lequel au moins l'une des parois de couvercle (65, 67) comporte une fente (78) s'étendant selon la direction en hauteur (8), dans laquelle au moins une partie du palier de pivot (44) peut être insérée selon la direction en hauteur (8).

9. Différentiel pour blocs de construction (2) selon la revendication 8, dans lequel la fente (78), considérée selon la direction en hauteur, comporte une extrémité de fente et le palier de pivot (44) est en appui contre l'extrémité de fente avec une précontrainte mécanique.

10. Différentiel pour blocs de construction (2) selon l'une des revendications 7 à 9, dans lequel les parois de couvercle (65, 67) sont reliées aux parois de cage (14, 16) transversalement à la direction en hauteur (8) par un assemblage en recouvrement (32, 70).
